# EUROPEAN PATENT SPECIFICATION

(11) **EP 0 930 721 B1**
(45) Date of publication and mention of the grant of the patent: **20.06.2007**
(21) Application number: 97403174.2
(22) Date of filing: 29.12.1997
(51) Int. Cl.: H04B 1/707, H04B 7/26

(54) **Telecommunications system with bandwidth agile receivers and transmitters**
Nachrichtenübertragunggsystem mit bandbreitevariablen Empfängern und Sendern
Système de télécommunication avec des récepteurs et émetteurs à largeur de bande agile

(43) Date of publication of application: 21.07.1999
(73) Proprietor: Nortel Matra Cellular, 78280 Guyancourt Cédex (FR)
(72) Inventor: Lucidarme, Thierry, 78180 Montigny-le-Bretonneux (FR)
(74) Representative: Bird, William Edward

(56) References cited:
- WO-A-97/21294
- US-A- 4 907 087
- US-A- 5 128 959
- US-A- 5 673 286

## Description

The present invention relates to a telecommunications system, in particular, a transmitter or receiver with improved spectrum efficiency. The present invention may also relate to spread spectrum systems, i.e. the transmitted signal is spread over a frequency band much wider than the minimum bandwidth required for the transmission of the information. The present invention may also relate to spread spectrum systems in which the spreading of the signal is achieved by encoding it with a pseudo-random code sequence, otherwise known as pseudo noise (PN) which is independent of the information itself. In particular, the present invention relates to a mobile radio telecommunications system in which a base station and/or a mobile station can transmit and/or receive using communication, e.g. traffic or signalling, channels with dynamically adaptive bandwidths. The present invention is particularly suitable for adaptive expansion of mobile radio telecommunications systems to meet increased traffic demand, e.g. cellular telephone systems.

### Technical Background

The increasing number of subscribers using mobile telephone systems within limited frequency ranges stimulates interest to maximise spectrum efficiency. This problem cannot be seen in isolation but involves many system aspects such as the level of interference from other transmitting mobile telephones and other external radio transmitters, reuse factors within the cells of a cellular system and power control of the mobile transmitters. One method of trying to improve spectrum efficiency is Code Division Multiple Access (CDMA) e.g. as specified in the ISO 95 standard. In this system individual transmissions are spread in frequency by modulating the message signal by a pseudo-random digital spreading code whose bit rate (commonly called "chip rate" to distinguish over the bit rate of the message data, because the digital spreading code has a higher bit rate than the bit rate of the data and "chops" the bits of data into "chips") is much higher than the bit rate of the message. The duration of a chip is the period of the clock which generates the pseudo-random code. The pattern of the chips is determined by the information-independent pseudo-random spreading code. At the receiver the received signal is despread by multiplying the received signal by an identical pseudo-random code thus reversing the process. Undesired signals which are not synchronous with the reference code are also multiplied by the code and are therefore spread to a greater bandwidth from which the synchronous desired signal can be filtered. Hence, the signal-to-noise ratio is improved. Further, by using different patterns which have a low mutual correlation factor, many transmissions can be made distinguishable within the same frequency band.

One problem with CDMA is the fact that all transmissions using the same frequency band interfere with each other slightly as each transmission is spread into the complete bandwidth. As long as all transmissions at a receiver are of the same power level, this causes only a slight disturbance. However, when powerful transmitters are close to a receiver, the interference for very week signals (e.g. remote mobile stations) can reach a serious level. Accordingly, in CDMA systems, e.g. as pioneered by Qualcomm. Inc., California, USA, the power of all mobile transmitters must be controlled carefully or transmission quality is reduced (near-far problem).

The types of data to be transmitted by radio systems is continuously increasing, e.g. video, data, telephone, multi-media. The bandwidth requirements for each data type are different. A mobile telecommunications with dynamic allocation of bandwidth for a channel is known from GB 2 310 972. In particular, a transceiver is disclosed with wideband circuitry for transmitting and receiving signals and means for adapting the bandwidth depending upon an amount of information processed by the circuitry in a fixed time. This known system attempts to optimise the available and dynamically varying bandwidth to allow fluctuations in the amount of information transmitted in a fixed time.

EP 0 719 062 describes a method of partitioning available radio spectrum into specific channel/conduit components aligned to specific services and allocating sub channels and conduits to provide needed bandwidth for a particular application.

Although some of the known designs described above discuss using different bandwidths, none provide a simple mechanism for adaptive or evolutive change of bandwidth within a cellular telecommunications system.

There is no universal agreement as to whether there should be standardisation on TDMA, FDMA or CDMA access schemes or combinations of these for mobile radio telecommunication systems. Hence, there is likely to be mixing of systems, e.g. in Europe the existing system, GSM, a TDMA system operating in a narrow band, may be used in parallel with new, alternative systems using CDMA having a broader band. It would be advantageous if mobile stations could function in each system without an excessive complication of the mobile station itself.

WO 97 21294 discloses a transmitter for transmitting information and able to vary the bandwidth by varying the chip rate. The chip rate can be changed if excessive noise is experienced in neighbouring frequency bands.

### SUMMARY OF THE INVENTION

It is an object of the present invention to provide a telecommunications system and a method of operating the same with improved spectrum efficiency.

Another advantage of the present invention may be to improve the quality of reception and transmission in a radio telecommunications system for individual receivers in a dynamic way without necessarily increasing the power of the transmission.

It is still a further object of the present invention to provide a mobile radio communications system and a method of operating the same which is compatible with existing digital cellular mobile telephone systems, in particular to provide a mobile station which can function with existing TDMA and CDMA systems as well as with the inventive adaptive bandwidth system described herein.

It is still another object of the present invention to provide a spread spectrum mobile radio communications system and a method of operating the same which does not suffer from the "near-far" problem.

The present invention may provide a transmitter for a telecommunications network for transmitting digital information signals at at least one centre frequency to mobile units over radio channels, wherein said transmitter is bandwidth agile, the transmitter comprising means for spreading said transmission information signals, the transmitter being adapted to change the bandwidth of transmissions by varying the number of hopping frequencies in a frequency hopping scheme and a chip rate in a dynamis way, the bandwidth of a transmitted signal being varied in dependence upon the distance of a mobile unit from the transmitter.

The present invention may also provide receiver for a telecommunications network for receiving digital information signals at at least one centre frequency from mobile units, wherein said receiver is bandwidth agile, the receiver comprising means to despread received information signals, the receiver being adapted to change the bandwidth for downconverting the received information signals by varying the number of hopping frequencies in a frequency hopping scheme and to despread with a chip rate in a dynamic way, the bandwidth of a received signal being varied in dependence upon the distance of a mobile unit from the receiver.

The present invention may also provide a radio telecommunications system including a base station transmitter, said base station transmitter being a transmitter as defined above.

The present invention may also provide a method of operating a telecommunications network comprising a base station communicating with mobile units, comprising the steps of: transmitting by said base station at least one digital information signal at at least one centre frequency spreading said transmission information signals, and adapting the bandwidth of said transmitted signal by varying the number of hopping frequencies in a frequency hopping scheme and a chip rate in a dynamic way, the bandwidth of a transmitted signal being varied in dependence upon the distance of a mobile unit from the base station.

Another aspect of the present invention is to provide a radio telecommunications system in which the bandwidth of the transmissions may be adaptively varied depending certain criteria. Hence, the present invention includes a radio telecommunications system whose spectral occupancy is gradually adaptable according to radio channel quality measurements made before and/or during communications. For instance, the spectral occupancy may be made inversely proportional to the signal quality. The selection of bandwidth may be made dependent upon an algorithm, for example: the bandwidth is made dependent upon at least one radio channel transmission characteristic, e.g. signal quality, bit error rate of the received transmission, signal strength; the bandwidth may be determined before or during a transmission; the bandwidth may be inversely proportional to the error rate.

An advantage of the present invention may be to provide a telecommunications system and a method of operating the same which can adapt the bandwidth of transmissions over a wide range smoothly, dynamically and continuously.

Another advantage of the present invention may be a radio telecommunications system and a method of operating the same in which the bandwidth for transmissions to a remote station may be broadened without requiring an increase of power.

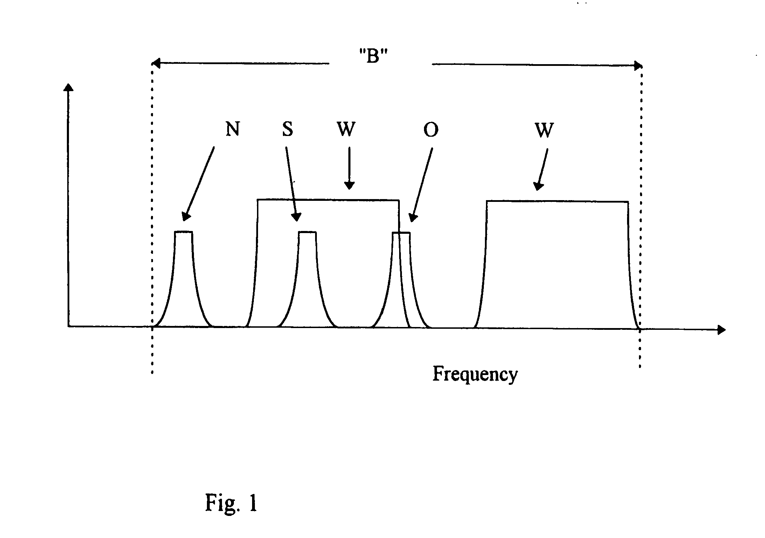

In accordance with the present invention there is also great flexibility as to how this bandwidth may be allocated within the available spectrum in order to improve the spectral occupancy. As shown schematically in Fig. 1 the available bandwidth "B" in a radio telecommunications system in accordance with the present invention may be divided into discrete narrow bandwidth transmissions "N" separated from wide bandwidth transmissions "W" or the narrowband transmissions may share or overlap the same frequencies as the wideband transmissions as shown at "S" and "O" respectively. The narrow bandwidth transmissions sharing the same frequencies and time as wide bandwidth transmissions may be kept orthogonal with respect to these by the use of, for example, code division of the wide bandwidth transmissions. Hence, the present invention includes a radio telecommunications system in which the spectra of various communications can overlap in order to optimise global communication quality within the system while remaining within the total spectrum available.

The bandwidth adaptation may be made dynamically, i.e. from transmission to transmission or within a transmission from frame to frame or may be made evolutively, i.e. the complete system may evolve from a narrow band system to a wide band system or vice versa without change of the hardware or software used within the system. Such an evolution may be slow, the bandwidth being adapted as the number of users grows or may also be used to adapt to changes in load, e.g. on a daily basis. Further, the system may include both wideband and narrowband transmissions concurrently, e.g. emergency transmissions may be broadcast at high power and with a narrow bandwidth whereas normal priority transmissions may be wideband. In particular, the radio telecommunications system may be a cellular telephone system and both narrow band and wide band transmissions may occur concurrently in one cell for transmissions with different mobile stations. Thus, the present invention gives the system designer and/or operator a wide flexibility as to the bandwidth used within the system. The present invention is particularly useful when the majority of the transmissions are narrowband and a relatively few are of poor quality. By dynamically widening the bandwidth for only the poor quality transmissions, their quality can be improved without significantly increasing the interference of the other transmissions. At the same time the narrow band transmissions do not interefer with the wideband transmissions as these may be coded with a PN code which on reception rejects any transmissions not synchronous with the code.

The dependent claims define further embodiments of the present invention. The present invention, its advantages and embodiments will now be described with reference to the following drawings.

### BRIEF DESCRIPTION OF THE DRAWINGS

Fig. 1 is a schematic representation of the available frequency spectrum of a telecommunications system in accordance with the present invention.
Figs. 2 and 3 are schematic representations of cells in a mobile cellular telephone system in accordance with the present invention.
Fig. 4 is a schematic representation of a base station and a mobile station in accordance with one embodiment of the present invention.
Fig. 5 is a schematic representation of a base station in accordance with a further embodiment of the present invention.
Fig. 6 is a schematic representation of a base station in accordance with a further embodiment of the present invention.
Fig. 7 is a schematic representation of a mobile station in accordance with a further embodiment of the present invention.

### DESCRIPTION OF THE ILLUSTRATIVE EMBODIMENTS

The present invention will be described with reference to certain embodiments and to certain drawings but the invention is not limited thereto but only by the claims. Further, the present invention will be described with reference to a mobile cellular telephone system but the invention is not limited thereto. The present invention also includes within its scope any form of telecommunication system, in particular, radio telecommunication systems, e.g. packet radio systems, public mobile radio (PMR), special mobile radio (SMR), Local Area Networks, (LAN), Metropolitan Area Networks (MAN), Wide Area Networks (WAN), paging systems and cordless telephone systems as used in private homes. The present invention is not limited to any particular access method. The following description will be made with reference to a CDMA system, but the invention is not limited thereto. The present invention may also be applied to systems with other access methods, e.g. TDMA or FDMA or combinations of one or more of TDMA, CDMA and FDMA. Further, the present invention may be used with various digital modulation schemes, an non-limiting list of which includes Binary Phase-Shift keying (BPSK), Quadrature Phase-Shift keying (QPSK), Gaussian Minimum Shift keying (GMSK), π/4 - QPSK, Frequency shift keying (FSK), Quadrature Amplitude Modulation (QAM) and their derivatives and modifications.

The present invention includes a bandwidth agile radio transmitter and/or receiver. In particular, the bandwidth agility is adaptable in a substantially smooth way within an available frequency band. In accordance with the present invention, the adaptation of bandwidth may be in a series of steps (as is typical for digitally controlled electronic equipment) but these steps may be made as small as desired. The adaptation of the bandwidth may be made independent of the information rate to be transmitted, independent of the type of modulation used for the digital information and independent of the frequency used to transmit, i.e. the bandwidth adaptation may be made at each transmitted or received frequency of the transceiver and is not obtained by frequency hopping alone. The present invention includes the possibility of frequency hopping and when it is used the bandwidth adaptation may be made at each frequency of the hopping sequence. The transmitter and/or receiver in accordance with the present invention may also be frequency agile, e.g. can also perform frequency hopping in addition to bandwidth adaptation.

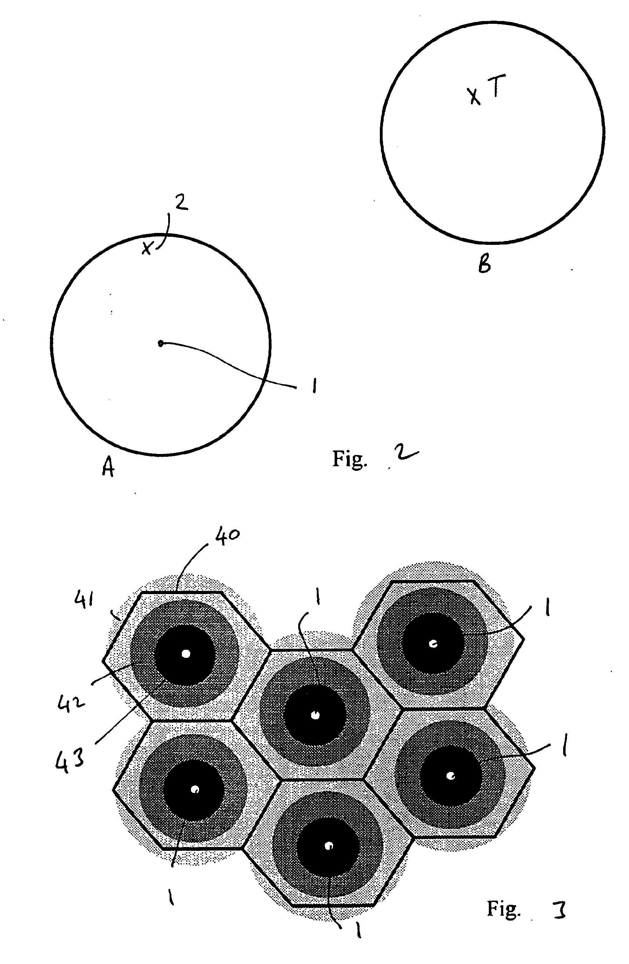

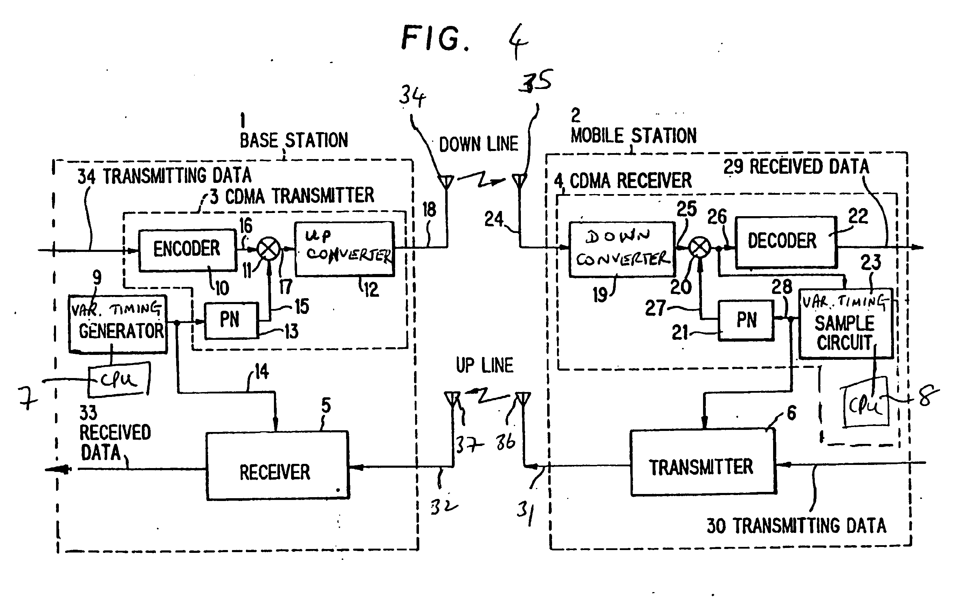

An advantageous use of the present invention will be described with reference to Figs. 2 and 3. In conventional cellular telephone systems problems may occur at the borders of a cell, i.e. remote from the base station of the cell and close to transmitters from other cells. At these locations the co-channel interference is high and the carrier strength is low. The high co-channel interference is caused by the RF power transmitted in the relevant frequency band which may include contributions from transmitters in other cells which are using the same frequency band as part of a frequency re-use scheme. This results in a low carrier to interference ratio (C/I) at cell borders with corresponding poor transmission quality. Conventionally, a handover to a stronger source is attempted in this situation, e.g. to a neighbouring cell. If the handover fails the call may have to be dropped. In accordance with the present invention the transmission bandwidth can be varied between wide limits, e.g. between narrow band and wide band in a continuous and adaptive manner. This may be done without directly influencing the base data stream, i.e. without altering (or affecting the choice) of the fundamental modulation technique (Binary Phase-Shift keying (BPSK), Quadrature Phase-Shift keying (QPSK), Gaussian Phase-Shift keying (GMSK) or Quadrature Amplitude Modulation (QAM)), etc. used to encode the data or of the coding technique used to compress voice messages, e.g. vocoding. Instead the bandwidth of the transmitted single is varied in a simple, dynamic and adaptive manner.

Fig. 2 is a schematic representation of two cells A and B of a cellular telephone system. A base station 1 is located somewhere near the centre of cell A. A mobile station (MS) 2 may roam anywhere within the system. When the MS 2 is close to the base station 1, the signal quality will generally be good due to the short distance. A transmitter T (e.g. a base station or another mobile) in cell B will be relatively far away and will have a low received signal strength at the MS 2. On the other hand, when MS 2 is at the limits of cell A, the signal strength from the base station 1 is lower and interference from the transmitter T higher. Conventionally, in narrowband TDMA systems such as the European GSM mobile telephone system, the transmitted power may be increased in order to improve signal quality to mobile stations at the limit of the cell. By re-using frequencies only in remote cells, co-channel interference may be reduced. In wider band CDMA systems, each cell normally uses the same frequency band and hence, the power needs to be increased for remote mobile stations. The increase in power necessary to improve signal quality can be problematic as a mobile 2 at the limit of cell operating at high power is close to the next cell and can therefore cause interference in that cell. In accordance with the present invention, the bandwidth or the bandwidth and the transmitted power may be adjusted to improve signal quality while reducing the interference to other users.

It is generally known to the skilled person to set the power level of an MS 2 depending upon some characteristic of the quality of the received signal at the base station 1, e.g. signal strength, signal quality, error rate, carrier to interference ratio. For instance within the GSM system it is known to use a measure of signal strength or signal quality e.g. Rxlev known from GSM recommendation ETS 300578, defined as the RMS received signal at the base station 2 measured over the full range of -110 dBm to -48 dBm with an accuracy of +4 dB from -110 dBm to -70 dBm and with an accuracy of +6 dB over the full range, or Rxqual known from GSM recommendation ETS 05/08 or the bit error rate. Fig. 3 shows a schematic idealised cell arrangement of a cellular telephone system. The cells 40 are shown as hexagons but the skilled person will appreciate that the shape in practice may deviate widely from this. Located somewhere in the centre of each cell is a base station 1. Mobile stations 2 communicating with the base stations 1 and at different distances therefrom will have differing signal strengths and qualities, i.e. differing Rxlev and Rxqual values. In accordance with the present invention as the characteristic of the signal quality, e.g. Rxlev or Rxqual, reduces the bandwidth of the transmission may be increased. Thus as the mobile station 2 moves further away from the base station 1, the bandwidth used for transmission is increased. At the same time the transmission power may also be increased.

As shown schematically in Fig. 3 mobile stations close to the base stations 1 may operate in a first regime 43, in which the transmission bandwidth is narrow and optionally the transmission power may be low. For instance, in zone 43 the bandwidth may be unchanged, i.e. no spreading of the transmitted signal. In particular, the bandwidth may be that used by conventional cellular telephone systems such as The European GSM system. In more distant zones 42, 41, the bandwidth may be increased and optionally also the transmission power. Hence, in accordance with one embodiment of the present invention, the bandwidth selected for a transmission may be made dependent upon the distance between the transmitter and the receiver, e.g. the distance between the MS 2 and the base station 1. The advantage of increasing the bandwidth in the more remote zones 42, 43 is that the signal to noise ratio of the transmission can be improved. At the same time, the transmitted signals are spread throughout a larger bandwidth and therefore have less power density per frequency range. Mobile station 2 at the edge of each cell therefore provide less interference to mobiles stations in adjacent cells. The choice of bandwidth and optionally the power level may be made in accordance with an algorithm. For instance, the algorithm may include setting the bandwidth in dependence upon a transmitted signal characteristic or the distance between transmitter and receiver. If the bandwidth is increased, the power may be kept constant. This leaves the power density per bit of information constant. Alternatively, the power level may be increased by a factor. The present invention is not limited to such simple algorithms. Further, other characteristics of signal strength or signal quality may be used as a decision criterion.

In Fig. 3, three zones 41-43 of differing bandwidth and optionally transmission power are shown, however it should be understood that the present invention is not limited to three zones but may include a gradual gradation of bandwidth, optionally combined with a gradation of transmission power throughout each cell.

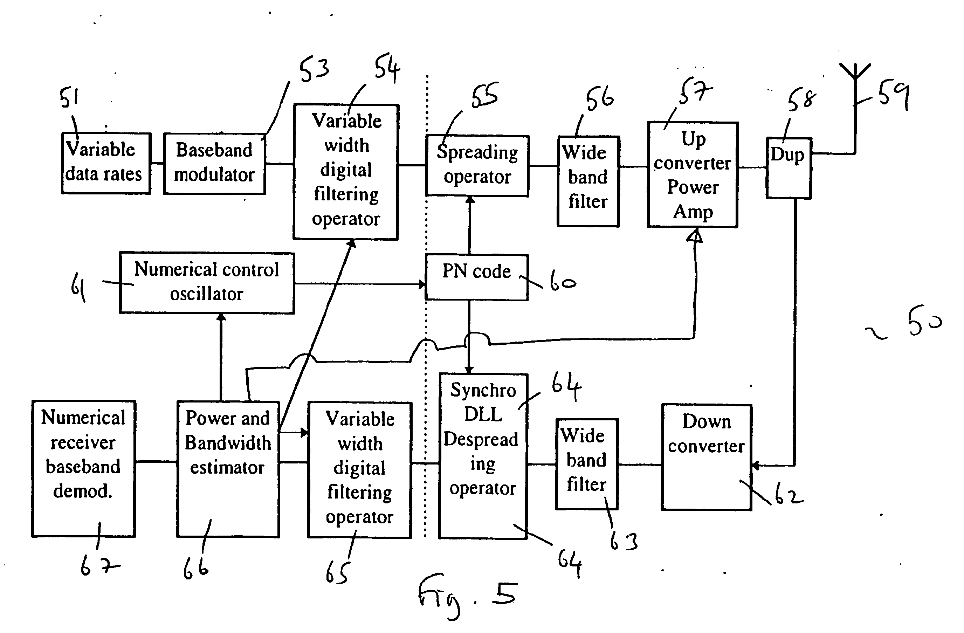

Fig. 4 shows a schematic representation of a digital radio telecommunications system in accordance with a first embodiment of the present invention. The system comprises a first station 1 which may be a fixed remote station, mobile station or a base station and a second station 2 which may be a base station, a mobile station or a fixed remote station. In the following it will be assumed that the first station 1 is a base station and the second station 2 is a mobile station but the invention is not limited thereto. Hence, base station 1 and mobile station 2 may be part of a paging system in which the mobile station 2 is a pager and can only receive data and optionally display it.

In accordance with the present invention the base station 1 may also include a transmitter 3 and a receiver 5 whereas the mobile station 2 may include a receiver 4 matched to the transmitter 3 of the base station 1 as well as a transmitter 6 matched to the receiver 4 of the base station 1. For example, base station 1 and mobile station 2 may be part of a cellular telephone system. In accordance with the present invention it is not necessary for the matched transceiver pair 3, 5 or 4, 6 to be of the same type, e.g. at least one matched pair 3, 5; 4, 6 may support any of CDMA, Time Division Multiple Access (TDMA) or Frequency Division Multiple Access (FDMA) or combinations of these, e.g. TDMA and FDMA as used for instance in the European GSM system in which transmissions are differentiated from each other in frequency and time (different time slots of the TDM system on different frequencies), or CDMA and TDMA and FDMA in which transmissions are differentiated in frequency, time and by coding from each other.

The transmitter 3 of the base station 1 includes an encoder 10 for generating a coded signal 16 by modulating a data signal 34 in a conventional manner, e.g. by amplitude or frequency modulation, for example with BPSK GMSK, QPSK, or QAM, etc. as well as optionally some form of coding, such as block convolutional coding, as well as optionally some form of interleaving. Transmitter 3 also includes a multiplier 11 for generating a spread spectrum signal 17 of larger bandwidth by spreading the coded signal 16 with a pseudo-random code sequence 15 (Pseudo-Noise, PN) from the PN generator 13. PN code 15 comprises a repetitive sequence or pattern of 1's and 0's. Various patterns may be stored in a memory, e.g. in a processor 7 and may be supplied to the PN generator as required. Methods of generating suitable PN codes are known from the articles by R. N. Mutagi, "Pseudo noise sequences for Engineers", Electronics & Communications, vol. 8, no. 2, April 1996 and by T. S. D. Tsui and T. G. Clarkson, "Spread-spectrum communications techniques", Electronics & Communications, vol. 6, no. 1, February 1994. An RF-modulator 12 modulates a high frequency carrier frequency with the spread spectrum signal 17 to provide a transmitted signal 18 which is supplied to an antenna 34. The skilled person will appreciate that the above describes a direct-sequence spread spectrum transmitter but the invention is not limited thereto. Instead of modulating and spreading the coded signal 16 at the intermediate frequency, the transmitted signal 18 may be modulated with the PN sequence directly. The present invention also includes multiple spreading, i.e. spreading the coded signal 16 and the transmitted signal 18. Alternatively a chirp transmitter as known from pulse compression radar may be used.

In accordance with the present invention, the chip rate of the PN generator 13 is determined by a variable timing generator 9 whose clock rate may be controlled by a suitable control circuit, e.g. by the processor 7. By altering the clock rate of the timing generator 9, the chip rate of the PN sequence 15 read out from the PN generator 13 is altered. The higher the clock rate, the more the signal 17 is spread in bandwidth. Hence, the bandwidth of the spread spectrum signal 17 can be varied smoothly by varying the clock rate of the timing generator 9 from no-spreading (no change in bandwidth) up to the highest bandwidth obtainable with the inventive system. By setting the timing generator 13 and/or the PN generator 13 appropriately, the PN generator 13 may be configured to generate only a continuous "1", e.g. by stopping the clock when the generator 13 is producing a "1". In this case, there is no spreading of signal 16 in the multiplier 11. Alternatively, by driving the PN generator 13 with the maximum clock rate produceable by the variable timing generator 9, and using a suitable PN sequence 15, the highest level of bandwidth spreading can be obtained. Intermediate values of the clock rate of the timing generator 9, provide intermediate levels of bandwidth spreading. Additionally, the lengths of the PN codes 15 generated by the generator 13 may also be varied although this will have no direct influence on the bandwidth of the transmitted signal 18.

The timing signal from the timing generator 9 may be supplied to the receiver 5 for controlling the timing required for the processing of signals received at the base station 1 via antenna 37.

The receiver 4 of the mobile station 2 comprises an RF down converter 19 for down converting a received high frequency signal 24 from an antenna 35 thus generating an intermediate frequency (IF) signal 25, as well as a multiplier 20 for generating a despread spectrum signal 26 by multiplying the IF signal 25 with a PN code 27 from a PN generator 21. A variable timing sample circuit 23 provides a timing signal 28 for driving the PN generator 21 in synchronism with the timing of the received IF signal 25. The bit-rate and the phase of the variable timing circuit 23 may be controlled by a suitable control circuit such as may be provided by suitably programming a processor 8. A portion of the despread spectrum signal 26 is supplied to the timing circuit 23. In the timing circuit 23 the despread spectrum signal 26 is checked as to whether a code signal is correctly obtained by changing the delay time of the PN code signal 27, so that the timing of the mobile station timing signal is determined. Alternative methods of obtaining the timing signal 28 are included within the scope of this invention, e.g. by delay locked loops, DDL or thau dither loops TDL. The timing signal 28 may be supplied to the transmitter 6 for controlling the timing of transmissions from the mobile station 2 sent via antenna 36.

In accordance with the present invention the receiver 5 and the transmitter 6 may be similar to the receiver 4 and the transmitter 3 as described above or may be different.

In the above described system, the bandwidth of the transmitted signal 18 may be varied at will by altering the clock rate of the timing generator 9. The mobile station 2 must be aware of the correct clock rate to use in the timing sample circuit 23 for reception. This may be achieved by sending the appropriate messages from the base station 1 to the mobile station 2 on a signalling channel using a message coded in a way which represents the clock rate to be used.

In accordance with the present invention other techniques of broadening bandwidth of the transmitted signal may be used in addition to the one described above, e.g. slow frequency hopping or changing the fundamental modulation technique. The spreading of the transmitted signal according to all the embodiments of the present invention which vary the clock rate of a direct sequence PN code is independent of the use of frequency hopping. This means that each transmitted signal may be spread at each hopping frequency. Accordingly, the transmission at each hopping frequency may be described as having a centre frequency about which the transmitted signal is spread into a wider frequency band.

In addition, the transmission power of mobile station 2 and/or base station 1 may be controlled in accordance with the present invention so that for each transmission the combination of transmitted power and bandwidth may be optimised and not just either one of them. Further, the system described above may be included in a TDMA system, i.e. the data for one time slot of a TDMA transmission is encoded and spread independently of other time slots before transmission. Between time slots, the clock rate of the timing generator 9 and the PN sequence from PN generator 13 may be altered. Hence, the mobile station 2 and/or base station 1 are dynamically bandwidth agile.

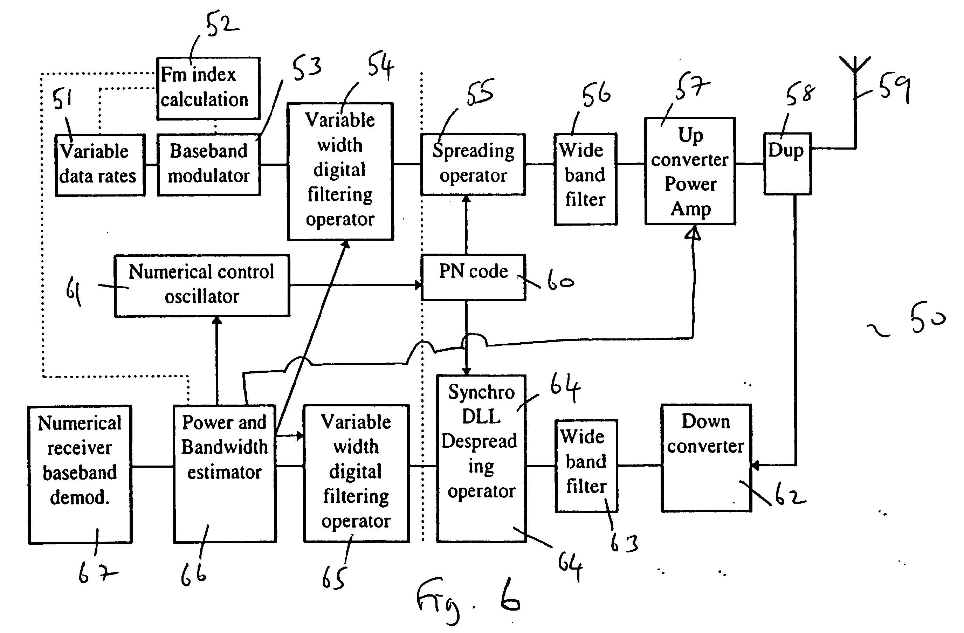

A second embodiment of the present invention will be described with reference to Fig. 5. Fig. 5 is a schematic representation of one embodiment of a base station transceiver device 50 in accordance with the present invention. At the heart of the device 50 is a power and bandwidth determination circuit 66 which determines an optimum combination of bandwidth and transmission power for each particular transmission, either before the start, at the start of the transmission or continuously throughout the transmission. To achieve this optimisation, the determining circuit 66 requires an input of at least one relevant signal characteristic, e.g. signal quality and/or power, alternatively the distance from the transmitter to the receiver, as well as a means for optimising the power/bandwidth, e.g. an algorithm, and a means to control and set the bandwidth and power independently. In Fig. 5, the power and bandwidth determination circuit 66 controls the setting of the transmitted power level by operating directly on attenuators in the up-converter power amplifier 58. Omitted from Fig. 5 are details of coding and interleaving of the digital signals as well as frequency hopping as applied to the carrier wave which are all known to the skilled person, e.g. from generic cellular telephone systems such as the GSM system. Detailed descriptions of this system may be found in the book "The GSM system for mobile communications", by Michel Mouly and Marie-Bernadette Pautet, Cell & Sys, 1992 as well as in the relevant GSM ETSI standards themselves.

The transceiver 50 may receive data 51 at varying rates, e.g. voice, packets of data, video. The data is modulated by the baseband modulator 53 with the modulation scheme appropriate to that data. The signal from the modulator 54 at the intermediate frequency is passed to a variable width digital filter 54 whose width is defined to be appropriate to the bandwidth of the signal from the modulator 54. The filter bandwidth is set by the power and bandwidth determining circuit 66. From the filter 54, the modulated signal at the intermediate frequency is supplied to a spreading operator 55 which may be a multiplier. In the spreading operator 55 the modulated signal is modulated with a PN code from a PN code generator 60. The chip rate of the PN code is determined by the clock rate of a numerically controlled oscillator 61. The value of the clock rate is determined and set by the power and bandwidth determining circuit 66. The spread signal from the operator 55 is supplied to a wide-band filter 56 for limiting unwanted side lobe frequencies produced by the spreading code. From the wideband filter 56 the spread and filtered signal is supplied to an up converter power amplifier 57 in which a carrier wave is modulated by the spread and filtered signal and supplied to an antenna 59 via, for example a duplexer 58.

When the transceiver 50 operates as a receiver, the reverse of the above operations is carried out. A received signal from antenna 59 is supplied via a duplexer 58 to a down converter 52 in which the intermediate frequency signal is extracted from the RF carrier wave. The extracted signal may be supplied to a wideband filter 63 to limit the received frequencies to the relevant range. From the wideband filter 63, the signal is passed to a despreading operator. In order to carry out the despreading, it is necessary for this circuit to receive the timing of the signal. This may be done by a delayed locked loop (DLL) as is known to the skilled person. In a DLL two signals are generated from the input signal, one delayed and one advanced, two envelope detectors are used to extract the envelopes of the two signals thereby removing the data. The average voltages are subtracted and supplied to the control input of a variable oscillator, the output of the VCO being supplied to the PN generator 60.

In the despreading operator 64 the intermediate frequency signal is multiplied by the PN code form the PN code generator 60 to extract the modulated data signal. This signal may be passed to a variable width digital filter 65 for final frequency band limitations before the received signal is analysed for signal quality and/or strength by the power and bandwidth determining circuit 66. The bandwidth of the filter 65 is set by the power and bandwidth determining circuit 66. The signal from the filter 65 is passed to the power and bandwidth determining circuit 66 in which the signal control characteristic, e.g. signal quality and/or signal strength, is determined for use in setting the bandwidth of the transmission. If it is determined that the signal quality is too low, the power and bandwidth determining circuit recalculates an optimum bandwidth and/or transmission power and sends the appropriate commands to the relevant circuits for controlling bandwidth and/or power level. Finally, the signal is demodulated in a baseband demodulator 67 with the appropriate modulation scheme to extract the data signal.

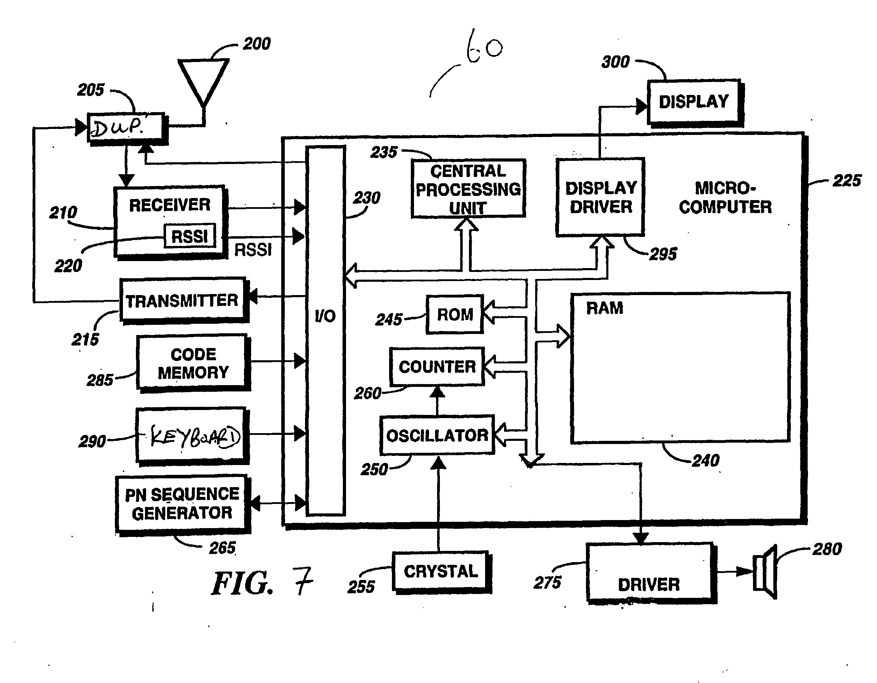

A third embodiment of the present invention will be described with reference to Fig. 6. Fig. 6 shows a transceiver similar to that shown in Fig. 5 and reference numbers in the two figures refer to similar components and/or functional elements of the invention. A detailed description of all the components of the third embodiment will not be provided as most of them have been described with reference to the second embodiment. An addition in the third embodiment compared to the second embodiment is a circuit 52 for setting the index of the FM modulation performed by a baseband modulator 54 for modulating the data 51. As is well known to the skilled person, the bandwidth of a frequency modulated signal depends approximately linearly upon the modulation index, i.e. the bandwidth equals 2βFm approximately for β ≥ 1, where β represents the modulation index and Fm is the modulated frequency. The modulation index is set by the circuit 52 as determined by the power and bandwidth determining circuit 66. Generally, the higher the index the higher the power required. In the receiver the power and bandwidth determining circuit 66 sets the bandwidth of the filter 65 in accordance with the set modulation index for the particular transmission.

Fig. 7 is a schematic diagram of an embodiment of a mobile station 60 in accordance with the present invention capable of carrying out the functions described for the receiver 59, 62-67 of Fig. 5 as well as for the transmitter 51-59 of Fig. 5. The mobile station 60 comprises an antenna 200 for transmitting and receiving RF signals and a duplexer 205 coupling the antenna 200 to receiver 210 and transmitter 215. The station 60 typically has a keyboard 290 for user entry of data, e.g. telephone numbers. The transmitter 215 may be configured for spreading and up conversion of the modulated data signal as described above with respect to Fig. 5 using the spreading sequence generated by a PN sequence generator 265. The receiver 210 may include a received signal strength indicator (RSSI) for determining the strength of the received signal. The receiver 210 may be configured as described above with respect to Fig. 5 for the down converting and despreading of the received signal using the coding sequence from the PN generator 265 to recover the modulated data signal which may be supplied with the signal strength indication to a microcomputer 225 via an input/output bus 230 for demodulation and decoding of the data. The modulated data may be processed by a central processing unit (CPU) 235 within the microcomputer 225. Demodulated and decoded data may be stored in random access memory (RAM) 240 or may be, e.g. for speech, delivered to the loudspeaker 280 via a driver 275. Alternatively, a data message may be displayed on the display 300 via a display driver 295. The functions of the circuits 52 to 54 and 65 to 67 may be carried out by suitably programming the CPU 235. For example, CPU 235 may carry out the power and bandwidth determinations as explained for circuit 66 of Fig. 5 and the necessary commands to control power and bandwidth may be transmitted via I/O bus 230 to the respective circuits.

In addition to the RAM 240, the microcomputer 225 may include a read only memory (ROM) 245 which stores the computer programs required for operation of the station 60 as well as a code memory 285 for storing reference data, e.g. the standard clock rate required for the PN generator 265 for the local standard CDMA telecommunications network. Further, included in the microcomputer 225 is an oscillator 250 for generating timing signals required for the operation of microcomputer 225. The oscillator 250 may be driven by a standard timing reference such as a crystal or crystal oscillator 255. A counter 260, coupled to the oscillator 250 provides programmable timing functions, e.g. the variable clock rate provided by the variable oscillator 61 of Fig. 5 for driving a pseudo-noise generator 265 at different clock rates as required for the generation of the required bandwidth. The PN generator 265 may be a shift register which, when provided with the necessary information for setting a plurality of settable switches within the shift register, generates a PN sequence of the required length.

It will be appreciated that the mobile station 60 is capable of working with a CDMA/TDMA cellular telephone system, a narrow band TDMA cellular telephone system such as GSM, as well as with a TDMA system allowing adaptive bandwidth control in accordance with the present invention. In TDMA cellular telephone systems, certain time slots may be used for monitoring a common signalling channel, as well as for "listening" to the transmitters from adjacent cells. When the mobile station 60 is within the narrow bandwidth TDMA system, the mobile station receives control signals indicating the type of system on the common signalling channel. As it receives in these control signals no indications as to bandwidth it assumes that no bandwidth control is required and the PN code generator 265 generates only 1's by stopping the clock at the appropriate time. The mobile station 60 then operates as a conventional narrow band TDMA transceiver with no spreading of transmitted signals.

On entering a CDMA/TDMA system the mobile station 60 receives control signals on a signalling channel indicating the type of system. In these signals there is no indication of the bandwidth control so that the mobile station 60 assumes that it is in a normal CDMA system. The PN sequence generator 265 is then driven by the oscillator 250 at the standard clock rate obtained from the code memory 285. The mobile station 60 then operates as a wide band CDMA/TDMA transceiver.

On entering a TDMA variable bandwidth cellular telephone system in accordance with the present invention, the mobile station 60 receives control signals specifying (among other parameters) the required clock rate for the variable timing generator 265 and/or power level for the transmitter 215 from the appropriate base station in a cell. These signals may be received on a common signalling channel which may operate without spreading or in a spread channel whose spreading is done at a standard known clock rate with a known PN code. Suitable clock rates may vary between the clock being stopped on a "1" or in a range from a few kilohertz up to the megahertz region or higher, e.g up to 250 MHz or higher. The required clock rate may be sent in coded form, i.e. specific codes may be assigned to particular clock rates. Alternatively, the clock rate may be derived from the received signal by a tracking loop or similar electronic circuit. Once the mobile station 60 has locked onto the bases station, a dedicated control channel may be assigned and further frequency, clock rate and synchronisation data transmitted from the base station to the mobile station. In accordance with these control signals, the clock rate of the PN generator 265 is set for further communications and may be adapted during the communications as determined by the base station if signal quality deteriorates.

While the invention has been shown and described with reference to preferred embodiments, it will be understood by those skilled in the art that various changes or modifications in form and detail may be made without departing from the scope of this invention. For instance, the transceiver in accordance with the present invention may also be adapted for use in a CDMA cellular telephone system in which transmissions may be carried out continuously (i.e. not TDMA for instance). In this case it is preferable to duplicate (or triplicate) the transmitter and receiver function within each transceiver. For instance, three sets of receiver circuitry may be provided so that three communications may be received simultaneously, e.g. a first communication (the current communication, for example a telephone call, a second communication being information on a signalling channel for control purposes, e.g. the clock rate to be used for the first communication, and a third communication being information from the transmitters of base stations in adjacent cells which is used to decide if a handover is necessary and if so to which base station. Alternatively, the receiver circuitry may only be duplicated. In this case the control signals may be provided in-band on the first communication or the transceiver may use the second receiver for listening to the control signals and to the transmitters from other base stations at alternating times. Two of the transmitters and receivers may be used for simultaneous reception and transmission of traffic signals during a "soft-handover".

Further, various types of modulation scheme may be used. Particularly preferred are linear modulation schemes such as GMSK which do not generate significant amounts of sidelobes. In the above description the spreading operator was applied to the IF signal or the RF signal, however, the present invention also includes alternatively spreading the baseband data signal as well as combinations of any of these.

The present invention also includes dynamically adapting the bandwidth of individual transmissions by other means. For example, the present invention includes within its scope using a chirp transmitter as well increasing the bandwidth by increasing the number of frequencies used for slow or fast frequency hopping in a dynamic mobile specific way. A further example includes a modification of a generic cellular telephone system such as the European GSM system. In accordance with this example the number of frequencies used for hopping purposes is adapted for each mobile station in order to improve signal quality if required. For instance, if a particular base station has been assigned a set of "X" hopping frequencies the base station generally uses a lower number of frequencies than "X" in normal communications with the mobiles. For instance, it may attempt a priori not to use frequency hopping. If the power level required to maintain signal quality rises unacceptably, the base station informs the mobile over its dedicated signalling channel of the change to frequency hopping and the set and sequence to be used. This set may be a subset of the assigned "X" frequencies. Should quality deteriorate still further, a still larger number of frequencies may be used until all "X" frequencies have been exhausted. This dynamic change in bandwidth is preferably done in accordance with the present invention on a selective mobile-to-mobile basis rather than changing all of the mobile stations in one cell to a particular set of hopping frequencies. A further example involves assigning a first set "X" of frequencies to a cell of a cellular radio telecommunication system whose frequency re-use pattern in the system is sufficiently infrequent that interchannel interference is unlikely if these frequencies are used. A further set or sets of frequencies may be assigned to the cell. For instance, one set of frequencies "Y" may be frequencies with which the chance of interchannel interference from or of transmissions in neighbouring cells is higher than for the frequencies in the set "X". Yet another set of frequencies "Z" may be allocated which may lie in the guard gaps between frequencies used in the system. Use of the frequency set "Z" increases the likelihood of interchannel interference in the cell and in neighbouring cell. The base station in the cell may then dynamically allocate one or more of the sets "X" ,"Y" , "Z" in order to combat poor quality transmission in the cell. The base station may operate to an algorithm which determines when the less favourable sets "Y" and "Z" should be used, e.g. first "X" then "X" and "Y" and finally "X", "Y" and "Z". By subdividing the complete set of frequencies available to a cell into a larger and larger number of subsets, the bandwidth of the transmissions within the cell may be varied gradually by combining sets of frequencies. At the limit, the base station may allocate bandwidth in steps of one allocated frequency until all the frequencies are used for hopping.

Frequency hopping is also a spread spectrum technique but the implementation of frequency hopping, particularly the receiver design is usually more complex than for the embodiments described with reference to Figs. 4-7. Hence, the embodiments according to Figs. 4-7 may be seen as an alternative way to frequency hopping of reducing interchannel interference while providing the advantages of a simplified receiver and transmitter design and allowing dynamic and smoothly adaptive optimisation of the bandwidth.

In the embodiments described with reference to Figs. 5-7, the power and bandwidth estimation circuit 66 was described as being located in the base station which controls the reception parameters of the remote stations. However, the circuit 66 in the base station may be simply a device for setting the appropriate parameters of the other circuits while the optimisation calculations are made elsewhere in the network and the results, e.g. power level and clock rate for the PN generator 60 are transmitted to the respective base station via conventional signalling paths used in the network. For instance, the optimisation calculations may be performed in a base station controller, a mobile switching centre or in a centralised intelligent peripheral in an intelligent redio telecommunications network.

Further examples include the power and bandwidth estimation circuit 66 being included in a remote station, e.g. a mobile station, and the remote station controlling the operation of the base station with respect to bandwidth for the transmissions.

## Claims

1. A transmitter for a telecommunications network for transmitting digital information signals at more than one centre frequency to mobile units over radio channels, wherein said transmitter is bandwidth agile, the transmitter comprising means (11, 13, 15; 55, 60, 61) for spreading said transmission information signals, the transmitter being adapted to change the bandwidth of transmissions by varying the number of hopping frequencies in a frequency hopping scheme and a chip rate in a dynamic way, the bandwidth of a transmitted signal being varied in dependence upon the distance of a mobile unit from the transmitter.

2. A transmitter according to claim 1, wherein the useful bandwidth of the modulated signal fed to the spreading means is a function of a data rate and transmission power available.

3. A transmitter according to claim 1 or 2, further comprising means (57) to set the power of the transmission signal according to the bandwidth and a radio channel transmission H characteristic available from received information signals transmitted over the radio channels.

4. A transmitter according to any of claims 1 to 3, further comprising means for setting the bandwidth or bandwidth and power of said transmitter in dependence upon a radio channel transmission characteristic available from received information signals transmitted over the radio channels.

5. A transmitter according to claim 3 or 4, wherein said characteristic is at least one of signal strength, bit error rate and signal quality.

6. A transmitter according to any of claims 1 to 5 wherein said spreading means (11,13, 15; 55, 60, 61) are adapted for direct sequence spreading.

7. A transmitter according to claim 6 wherein said spreading means (11, 13, 15; 55, 60, 61) include a pseudo random sequence generator driven by a variable timing signal generator.

8. A receiver for a telecommunications network for receiving digital information signals at more than one centre frequency from mobile units, wherein said receiver is bandwidth agile, the receiver comprising means (20, 21, 23; 64) to despread received information signals, the receiver being adapted to change the bandwidth for downconverting the received information signals by varying the number of hopping frequencies in a frequency hopping scheme and to despread with a chip rate in a dynamic way, the bandwidth of a received signal being varied in dependence upon the distance of a mobile unit from the receiver.

9. A receiver according to claim 8, further comprising means (57, 66) for setting the bandwidth of said receiver in dependence upon a reception characteristic of one of the information signals.

10. A receiver according to claim 8 or 9, wherein said characteristic is at least one of signal strength, bit error rate and signal quality.

11. A receiver according to any of claims 8 to 10 wherein said despreading means (20, 21, 23; 64) are adapted for direct sequence despreading.

12. A receiver according to claim 11 wherein said despreading means (20, 21; 64) include a pseudo random sequence generator (21; 60) driven by a variable timing signal generator.

13. A telecommunications system including a base station transmitter, said base station transmitter being a transmitter in accordance with any of the claims 1 to 7.

14. A telecommunications system according to claim 13, further comprising means to set the bandwidth or power and bandwidth in accordance with a transmission characteristic of one of the received information signals transmitted over the air interface.

15. A method of operating a telecommunications network comprising a base station communicating with mobile units, comprising the steps of:
transmitting by said base station at least one digital information signal at more than one centre frequency, spreading said transmission information signals, and adapting the bandwidth of said transmitted signal by varying the number of hopping frequencies in a frequency hopping scheme and a chip rate in a dynamic way, the bandwidth of a transmitted signal being varied in dependence upon the distance of a mobile unit from the base station.

## Patentansprüche

1. Sender für ein Telekommunikationsnetz zum Senden digitaler Informationssignale auf mehr als einer Mittenfrequenz an Mobilteile über Funkkanäle, wobei der Sender bandbreitenagil ist, Mittel (11, 13, 15; 55, 60, 61) zum Spreizen der Sendeinformationssignale aufweist und dazu eingerichtet ist, die Bandbreite von Übertragungen durch variieren der Anzahl von Sprungfrequenzen in einer Frequenzsprungbetriebsweise sowie eine Chiprate dynamisch zu ändern, wobei die Bandbreite eines gesendeten Signals in Abhängigkeit von dem Abstand eines Mobilteils von dem Sender variiert wird.

2. Sender nach Anspruch 1, wobei die Nutzbandbreite des an die Spreizmittel gespeisten modulierten Signals eine Funktion einer verfügbaren Datenrate und Sendeleistung ist.

3. Sender nach Anspruch 1 oder 2, welcher ferner Mittel (57) aufweist zum Einstellen der Leistung des Sendesignals gemäß der Bandbreite und einer Funkkanal-Sendeeigenschaft, die aus empfangenen Informationasignalen, welche über die Funkkanäle gesendet wurden, verfügbar ist.

4. Sender nach einem der Ansprüche 1 bis 3, welcher ferner Mittel aufweist zum Einstellen der Bandbreite oder der Bandbreite und der Leistung des Senders in Abhängigkeit von einer Funkkanal-Sendeeigenschaft, die aus empfangenen Informationssignalen, welche über die Funkkanäle gesendet wurden, verfügbar ist.

5. Sender nach Anspruch 3 oder 4, wobei es sich bei der Eigenschaft um die Signalstärke und/oder die Bitfehlerrate und/oder die Signalqualität handelt.

6. Sender nach einem der Ansprüche 1 bis 5, wobei die Spreizmittel (11, 13, 15; 55, 60, 61) für Direct-Sequence-Spreizung eingerichtet sind.

7. Sender nach Anspruch 6, wobei die Spreizmittel (11, 13, 15; 55, 60, 61) einen Pseudozufallefolgengenerator aufweisen, der von einem variablen Zeitsignalgenerator angesteuert wird.

8. Empfänger für ein Telekommunikationsnetz zum Empfangen digitaler Informationssignale auf mehr als einer Mittenfrequenz von Mobilteilen, wobei der Empfänger bandbreitenagil ist, Mittel (20, 21, 23; 64) zum Entspreizen empfangener Informationssignale aufweist und dazu eingerichtet ist, die Bandbreite zum Abwärtswandeln der empfangenen Informationssignale durch Variieren der Anzahl von Sprungfrequenzen in einer Frequenzsprungbetriebsweise zu ändern und mit einer Chiprate dynamisch zu entspreizen, wobei die Bandbreite eines empfangenen Signals in Abhängigkeit von dem Abstand eines Mobilteils von dem Empfänger variiert wird.

9. Empfänger nach Anspruch 8, welcher ferner Mittel (57, 66) zum Einstellen der Bandbreite des Empfängers in Abhängigkeit von einer Empfangseigenschaft eines der Informationssignale aufweist.

10. Empfänger nach Anspruch 8 oder 9, wobei es sich bei der Eigenschaft um die Signalstärke und/oder die Bitfehlerrate und/oder die Signalqualität handelt.

11. Empfänger nach einem der Ansprüche 8 bis 10, wobei die Entspreizmittel (20, 21, 23; 64) für Direct-Sequence-Entspreizung eingerichtet sind.

12. Empfänger nach Anspruch 11, wobei die Entspreizmittel (20, 21; 64) einen Pseudozufallsfolgengenerator (21; 60) aufweisen, der von einem variablen Zeitsignalgenerator angesteuert wird.

13. Telekommunikationssystem, das einen Basisstationssender aufweist, bei welchem es sich um einen Sender nach einem der Ansprüche 1 bis 7 handelt.

14. Telekommunikationssystem nach Anspruch 13, welches ferner Mittel umfasst zum Einstellen der Bandbreite oder der Leistung und der Bandbreite gemäß einer Sendeeigenschaft eines der empfangenen Informationssignale, die über die Funkkanäle gesendet wurden.

15. Verfahren zum Betreiben eines Telekommunikationsnetzes, das eine Basisstation aufweist, die mit Mobilteilen kommuniziert, wobei das Verfahren folgende Schritte umfasst:
Senden mindestens eines digitalen Informationssignals auf mehr als einer Mittenfrequenz durch die Basisstation,
Spreizen der Sendeinformationssignale und dynamisches Anpassen der Bandbreite des gesendeten Signals durch Variieren der Anzahl von Sprungfrequenzen in einer Frequenzsprungbetriebsweise und einer Chiprate, wobei die Bandbreite eines gesendeten Signals in Abhängigkeit von dem Abstand eines Mobilteils von der Basisstation, variiert wird.

## Revendications

1. Émetteur pour un réseau de télécommunications pour émettre des signaux numériques d'information à plus d'une fréquence centrale à des unités mobiles sur des canaux radio, dans lequel ledit émetteur est à multiples bandes passantes, l'émetteur comprenant des moyens (11, 13, 15 ; 55, 60, 61) pour étaler lesdits signaux d'information d'émission, l'émetteur étant conçu pour changer la bande passante d'émissions en faisant varier le nombre de sauts de fréquence dans un système de saut de fréquence et un débit de puce d'une façon dynamique, la bande passante d'un signal émis étant variée en fonction de la distance d'une unité mobile par rapport à l'émetteur.

2. Émetteur selon la revendication 1, dans lequel la bande passante utile du signal modulé amené au moyen d'étalement est une fonction d'un débit de données et d'une puissance d'émission disponible.

3. Émetteur selon la revendication 1 ou 2, comprenant de plus un moyen (57) pour fixer la puissance du signal d'émission selon la bande passante et une caractéristique d'émission de canal radio disponible à partir de signaux d'information reçus émis sur les canaux radio.

4. Émetteur selon l'une quelconque des revendications 1 à 3, comprenant de plus un moyen pour fixer la bande passante ou la bande passante et la puissance dudit émetteur en fonction d'une caractéristique d'émission de canal radio disponible à partir de signaux d'information reçus émis sur les canaux radio.

5. Émetteur selon la revendication 3 ou 4, dans lequel ladite caractéristique est au moins une caractéristique parmi l'intensité de signal, le taux d'erreurs sur les bits et la qualité de signal.

6. Émetteur selon l'une quelconque des revendications 1 à 5, dans lequel lesdits moyens d'étalement (11, 13, 15 ; 55, 60, 61) sont conçus pour l'étalement de séquence direct.

7. Émetteur selon la revendication 6, dans lequel lesdits moyens d'étalement (11, 13, 15 ; 55, 60, 61) comprennent un générateur de séquence pseudo-aléatoire piloté par un générateur de signal de synchronisation variable.

8. Récepteur pour un réseau de télécommunications pour recevoir des signaux numériques d'information à plus d'une fréquence centrale en provenance d'unités mobiles, dans lequel ledit récepteur est à multiples bandes passantes, le récepteur comprenant des moyens (20, 21, 23 ; 64) pour désétaler des signaux d'information reçus, le récepteur étant conçu pour changer la bande passante pour transposer à une bande de fréquence les signaux d'information reçus en faisant varier le nombre de sauts de fréquences dans un système de saut de fréquence et pour désétaler avec un débit de puce d'une façon dynamique, la bande passante d'un signal reçu étant variée en fonction de la distance d'une unité mobile par rapport au récepteur.

9. Récepteur selon la revendication B, comprenant de plus des moyens (57, 66) pour fixer la bande passante dudit récepteur en fonction d'une caractéristique de réception d'un des signaux d'information.

10. Récepteur selon la revendication 8 ou 9, dans lequel ladite caractéristique est au moins une caractéristique parmi l'intensité de signal, le taux d'erreurs sur les bits et la qualité de signal.

11. Récepteur selon l'une quelconque des revendications 8 à 10, dans lequel lesdits moyens de désétalement (20, 21, 23 ; 64) sont conçus pour un désétalement de séquence direct.

12. Récepteur selon la revendication 11, dans lequel lesdits moyens de désétalement (20, 21; 64) comprennent un générateur de séquence pseudo-aléatoire (21 ; 60) piloté par un générateur de signal de synchronisation variable.

13. Système de télécommunications comprenant un émetteur de station de base, ledit émetteur de station de base étant un émetteur selon l'une quelconque des revendications 1 à 7.

14. Système de télécommunications selon la revendication 13, comprenant de plus un moyen pour fixer la bande passante ou la puissance et la bande passante selon une caractéristique d'émission d'un des signaux d'information reçus émis sur l'interface aérienne.

15. Procédé de mise en oeuvre d'un réseau de télécommunications comprenant une station de base communiquant avec des unités mobiles, comprenant les étapes consistant à :
émettre par ladite station de base au moins un signal numérique d'information à plus d'une fréquence centrale,
étaler lesdits signaux d'information d'émission, et
adapter la bande passante dudit signal émis en faisant varier le nombre de sauts de fréquences dans un système de saut de fréquence et un débit de puce d'une façon dynamique, la bande passante d'un signal émis étant variée en fonction de la distance d'une unité mobile par rapport à la station de base.
